# FASCICULE DE BREVET EUROPEEN

(11) **EP 1 409 878 B1**
(45) Date de publication et mention de la délivrance du brevet: **15.11.2006**
(21) Numéro de dépôt: 02772444.2
(22) Date de dépôt: 19.07.2002
(51) Int. Cl.: F16B 1/00

(54) **DISPOSITIF DE BLOCAGE DE DEUX ELEMENTS ALLONGES TELESCOPIQUES**
VORRICHTUNG ZUR VERRIEGELUNG ZWEIER LÄNGLICHER TELESKOPELEMENTE
DEVICE FOR LOCKING TWO TELESCOPIC ELONGATED ELEMENTS

(30) Priorité: 24.07.2001 FR 0109834
(43) Date de publication de la demande: 21.04.2004
(73) Titulaire: Guidetti, Pascal, 38420 Revel (FR)
(72) Inventeur: Guidetti, Pascal, 38420 Revel (FR)
(74) Mandataire: Casalonga, Axel
(86) Numéro de dépôt international: PCT/FR2002/002581
(87) Numéro de publication internationale: WO 2003/010439

(56) Documents cités:
- FR-A- 2 522 743
- US-A- 836 303
- US-A- 2 495 674
- US-A- 5 595 410

## Description

La présente invention concerne un dispositif de blocage de deux éléments allongés dont un premier coulisse dans un second de façon télescopique.

On connaît déjà des dispositifs de blocage de tubes télescopiques grâce à des rondelles pivotantes. Le brevet US-A- 836 303 décrit un dispositif de blocage dans lequel l'une des rondelles est prolongée latéralement d'une patte permettant manuellement son pivotement et est munie d'un doigt en saille agissant sur l'autre rondelle. Le document US-A- 5 595 410 décrit un dispositif de blocage dans lequel un doigt radial pivotant est adapté, lorsqu'il est pivoté sous l'effet d'une poignée extérieure qui lui est solidaire, pour produire un effet de came assurant le pivotement des rondelles.

Plus précisément, la présente invention concerne un perfectionnement au dispositif de blocage décrit dans le brevet FR-A-00 04936.

Selon un objet de la présente invention, le dispositif de blocage comprend des moyens pour bloquer dans un premier sens longitudinal le premier élément par rapport au second élément et des seconds moyens pour bloquer dans l'autre sens longitudinal le premier élément par rapport au second élément, lesdits moyens de blocage comprenant des rondelles de blocage disposées autour du premier élément et dont respectivement une partie circonférentielle est placée entre deux appuis longitudinalement opposés dudit second élément et des organes élastiques de rappel placés entre ledit second élément et lesdites rondelles et agissant respectivement dans lesdits sens longitudinaux sur lesdites rondelles en des endroits éloignés desdits appuis de manière à amener lesdites rondelles de blocage dans des positions inclinées extrêmes par rapport au premier élément, dans lesquelles deux parties opposées des rondelles de blocage sont en contact avec le premier élément afin de bloquer le premier élément par rapport au second élément dans lesdits sens longitudinaux.

Selon l'invention, le dispositif de blocage comprend en outre : un organe de basculement comprenant une rondelle de basculement qui entoure à distance ledit premier élément qui est montée de façon articulée sur le second élément, radialement à ce dernier, et qui est placée entre lesdites rondelles de blocage ; des organes entretoises placés respectivement entre lesdites rondelles de blocage et ladite rondelle de basculement et solidaires de cette dernière ; et un organe de commande permettant d'agir sur l'organe de basculement, de telle sorte qu'une action sur cet organe de commande fait basculer l'organe de basculement qui, par l'intermédiaire desdits organes entretoises, agit sur lesdites rondelles de blocage de façon à les écarter de leurs positions extrêmes précitées à l'encontre desdits moyens de rappel, en réduisant leur inclinaison, afin de libérer le premier élément par rapport au second élément.

Selon une variante de réalisation préférée de l'invention, l'organe de basculement et lesdits organes entretoises forment une pièce unique.

Selon la présente invention, lesdits organes entretoises comprennent de préférence, respectivement, une partie en saillie formée sur la face de ladite rondelle de basculement tournée du côté de la rondelle de blocage correspondante.

Selon la présente invention, ledit second élément comprend de préférence un boîtier en deux parties assemblées dont le plan de contact entre elles s'étend selon un plan longitudinal passant par l'axe desdits éléments, que lesdits éléments de blocage, lesdits organes de rappel, ledit organe de basculement muni desdits organes entretoises et ledit organe de commande sont disposés dans un espace ménagé entre lesdites parties assemblées du second élément et que ledit organe de basculement muni desdits organes entretoises est articulé selon un axe dudit boîtier perpendiculaire audit plan de contact.

Selon la présente invention, ledit boîtier comprend de préférence des bagues d'assemblage qui entourent les extrémités de ses parties précitées.

Selon la présente invention, ledit second élement comprend de préférence un élément tubulaire dont une partie d'extrémité est fixée audit boîtier et dans lequel peut coulisser ledit premier élément.

Selon la présente invention, ledit élément tubulaire peut avantageusement comprendre un canal longitudinal auxiliaire et que ledit organe de commande comprend une tige de commande disposée dans ce canal longitudinal.

Selon la présente invention, ledit organe de commande peut avantageusement comprendre un bouton monté mobile sur ledit boîtier de façon à pouvoir être déplacé par pression, ce bouton et ledit organe de basculement comprenant de préférence des surfaces en appui telles que lorsque ledit bouton est déplacé dans un sens, il agit sur ledit organe de basculement pour écarter ladite rondelle de sa position extrème précitée.

Selon la présente invention, ledit bouton est de préférence monté pivotant sur ledit boîtier de façon à se déplacer sensiblement radialement.

Selon la présente invention, lesdits moyens d'appui desdites rondelles sont de préférence diamétralement opposés, lesdits organes élastiques de rappel sont de préférence diamétralement opposés respectivement auxdits moyens d'appui et lesdits organes entretoises sont de préférence respectivement diamétralement opposés aux moyens d'appui des rondelles correspondantes

La présente invention sera mieux comprise à l'étude d'un dispositif de blocage de deux éléments allongés télescopiques décrit à titre d'exemple non limitatif et illustré par le dessin sur lequel :
- la figure 1 représente une coupe longitudinale d'un dispositif de blocage de deux éléments allongés télescopiques, en position bloquée ;
- la figure 2 représente une coupe radiale selon II-II du dispositif de la figure 1 ;
- la figure 3 représente une coupe longitudinale d'une variante d'exécution du dispositif de blocage de la figure 1, en position débloquée ;
- la figure 4 représente une coupe radiale selon IV-IV du dispositif de la figure 3 ;
- la figure 5 représente une coupe longitudinale d'une variante d'exécution du dispositif de blocage de la figure 3, en position bloquée ;
- la figure 6 représente une coupe longitudinale du dispositif de blocage de la figure 5, en position débloquée ;
- la figure 7 représente une coupe radiale du dispositif de la figure 6.

En se reportant aux figures, on voit qu'on a représenté un dispositif de blocage 100, dans le sens longitudinal et l'un par rapport à l'autre, d'un élément allongé intérieur 2 tubulaire, coulissant dans un canal 3 d'un élément allongé extérieur 4, ce dernier étant constitué par un boîtier 101 sensiblement cylindrique et un élément tubulaire 102 dont une extrémité est engagée dans le boîtier 101. Le canal 3 est formé pour partie au travers du boîtier 101 et pour partie dans l'élément tubulaire 102

Le dispositif de blocage 100 comprend une rondelle de basculement 5 qui est disposée autour et à distance de l'élément intérieur 2, dans un logement intérieur annulaire 103 du boîtier 101 de l'élément extérieur 4. Cette bague 5 présente des axes diamétralement opposés 7 et 8 qui sont disposés dans des trous borgnes intérieurs opposés 9 et 10 du boîtier 101, de telle sorte que la rondelle 5 peut pivoter selon un axe 11 qui s'étend radialement aux éléments 2 et 4.

Le dispositif de blocage 100 comprend en outre, d'un côté et à distance de la rondelle de basculement 5, des premiers moyens de blocage 12 qui comprennent une rondelle de blocage 13 disposée autour de l'élément intérieur 2 et dans le logement annulaire intérieur 103 du boîtier 101 de l'élément extérieur 4. Ce logement 103 présente, d'un côté du plan longitudinal passant par l'axe 11 et entre la rondelle de basculement 5 et la rondelle de blocage 13, un rétrécissement local médian 15 qui détermine deux appuis locaux 16 et 17 longitudinalement opposés, tels que la rondelle de blocage 13 peut pivoter de façon à prendre des positions inclinées par rapport à l'axe des éléments 2 et 4.

De l'autre côté dudit plan longitudinal et à l'opposé du rétrécissement 15, les moyens de blocage 12 comprennent un ressort de compression 18 disposé dans un orifice longitudinal borgne 19 qui débouche dans le logement 103 en direction de la rondelle de basculement 5. Ce ressort 18 agit sur la face 13a de la rondelle de blocage 13 de manière à la repousser en direction de la rondelle de basculement 5, par pivotement entre les appuis 15 et 16.

Le dispositif de blocage 100 comprend également un organe entretoise qui est constitué par une partie en saillie 104 ménagée sur la face 5a de la rondelle de basculement 5 tournée du côté de la rondelle de blocage 13, l'extrémité de cette partie en saillie 104 venant en appui sur la face 13b de la rondelle de blocage 13 à l'opposé du ressort 18.

Le dispositif de blocage 100 comprend en outre, de l'autre côté de la rondelle de basculement 5, des seconds moyens de blocage 22 qui sont symétriques aux moyens de blocage 12 par rapport à l'axe radial 11.

Ces moyens de blocage 22 comprennent ainsi une rondelle de blocage 23 disposée autour de l'élément intérieur 2 et dans le logement intérieur 103 du boîtier 101 de l'élément extérieur 4. Ce logement 103 présente un rétrécissement local 25 qui détermine deux appuis locaux 26 et 27 longitudinalement opposés situés sensiblement en alignement longitudinal avec le ressort 18 et la partie en saillie 104 de la rondelle de basculement 5 des premiers moyens de blocage 12.

Les moyens de blocage 22 comprennent également un ressort de compression 28 disposé dans un trou longitudinal borgne 29 du boîtier 101 de l'élément extérieur 4 et agissant sur la rondelle de blocage 23 en direction de la rondelle de basculement 5.

Les moyens de blocage 22 comprennent aussi un organe entretoise qui est constitué par une partie en saillie 105 ménagée sur la face 5b de la rondelle de basculement 5 tournée du côté de la rondelle de blocage 23, l'extrémité de cette partie en saillie 105 venant en appui sur la rondelle de blocage 23 à l'opposé du ressort 28.

Le ressort 28 et la partie en saillie 105 de la rondelle 5 sont sensiblement en alignement longitudinal avec les appuis 16 et 17 des moyens de blocage 12.

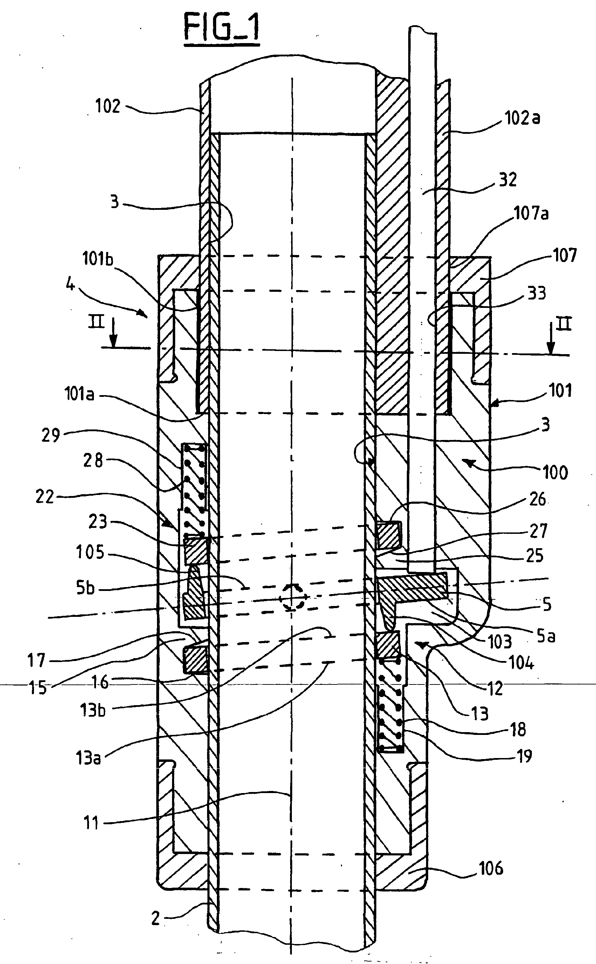

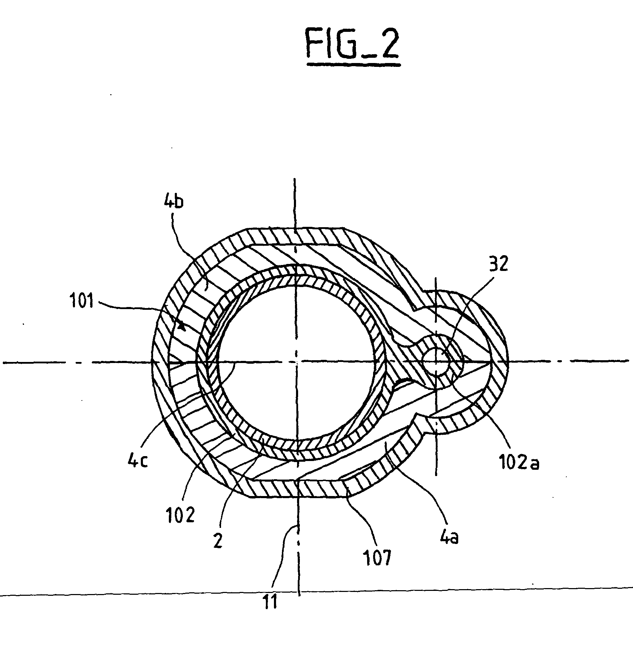

Dans la variante représentée sur les figures 1 et 2, le dispositif de blocage 100 comprend en outre une tige longitudinale de commande 32 disposée dans un canal longitudinal auxiliaire 33 de l'élément extérieur 4, qui passe à distance de la partie rétrécie 25 du logement 103 et dont l'extrémité 32a vient en appui sur la face 5b de la rondelle de basculement 5, à l'opposé de la partie en saillie 104 de cette rondelle de basculement 5. Le canal auxiliaire 33 est formé pour partie dans le boîtier 101 et pour partie dans une partie longitudinale en saillie 102a de l'élement tubulaire 102.

Dans l'exemple représenté sur les figures, le boîtier 101 de l'élément extérieur 4 comprend deux parties 4a et 4b qui présentent entre elles un plan longitudinal de contact 4c qui s'étend perpendiculairement à l'axe radial 11. Ces deux parties 4a et 4b du boîtier 101 sont assemblées entre elles par des bagues annulaires 106 et 107 entourant leurs extrémités.

Ainsi, les deux parties 4a et 4b du boîtier 101 de l'élément extérieur 4 sont symétriques par rapport au plan longitudinal contenant la surface longitudinale de contact 4c, de telle sorte que la partie du canal 3 du boîtier 101 recevant l'élément intérieur 2, la partie du boîtier 101 recevant l'extrémité de l'élément allongé tubulaire 102, la partie du canal auxiliaire 33 réalisée dans le boîtier 101, le logement 103 recevant les rondelles 5, 13 et 23, les trous borgnes 19 et 29 recevant les ressorts 18 et 28, sont formés par moitié dans les parties 4a et 4b, symétriquement par rapport au plan de contact 4c.

L'extrémité de l'élément tubulaire 102 et de sa partie longitudinale en saillie 102a est engagée dans un évidemment annulaire 101a de forme correspondante et fixée par une couche de colle 101b. La bague de fixation 107 présente un passage 107a de forme correspondante.

Le dispositif de blocage 100 de l'exemple représenté sur les figures 1 et 2 fonctionne de la manière suivante.

Lorsque la tige de commande 32 n'est soumise à aucun effort, les ressorts 18 et 28 inclinent les rondelles de blocage 13 et 23 vers la rondelle de basculement 5 jusqu'à les amener dans une position inclinée extrème dans laquelle elles entrent en contact avec l'élément intérieur 2 en deux zones diamétralement opposées situées l'une du côté des parties rétrécies 15 et 27 et l'autre du côté des ressorts 18 et 28. Les rondelles de blocage 13 et 23 étant bloquées longitudinalement dans des parties rétrécies 15 et 25, elles bloquent longitudinalement, chacune dans un sens, l'élément intérieur 2 par rapport à l'élément extérieur 4, qui se trouve ainsi bloqué longitudinalement dans les deux sens par effet de coincement.

En agissant longitudinalement sur la tige de commande 32 en direction de la rondelle de basculement 5, on peut alors faire pivoter cette rondelle de basculement 5 autour de l'axe radial 11. Ce mouvement de basculement est alors transmis aux rondelles de blocage 13 et 23 par l'intermédiaire des parties en saillie 104 et 105 de la rondelle de basculement 5 de manière à les écarter de leur position inclinée extrême de blocage en réduisant leur inclinaison à l'encontre de ressorts 18 et 28.

Ces mouvements de déblocage libèrent l'élément intérieur 2 par rapport à l'élément extérieur 4, qui peuvent alors être coulissés l'un par rapport à l'autre. Lorsqu'ils sont arrivés dans une position longitudinale relative déterminée, on relâche la tige de commande 32. Les ressorts 18 et 28 repoussent alors les rondelles 13 et 23 pour les amener dans leur position de blocage décrite précédemment en faisant basculer la rondelle de basculement 5 en sens opposé qui elle-même repousse la tige de commande 32.

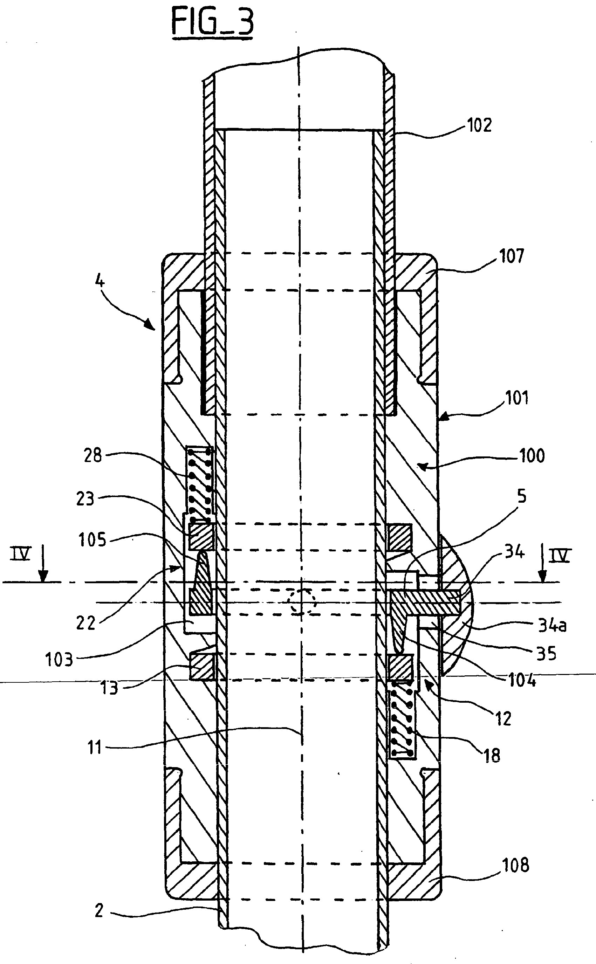

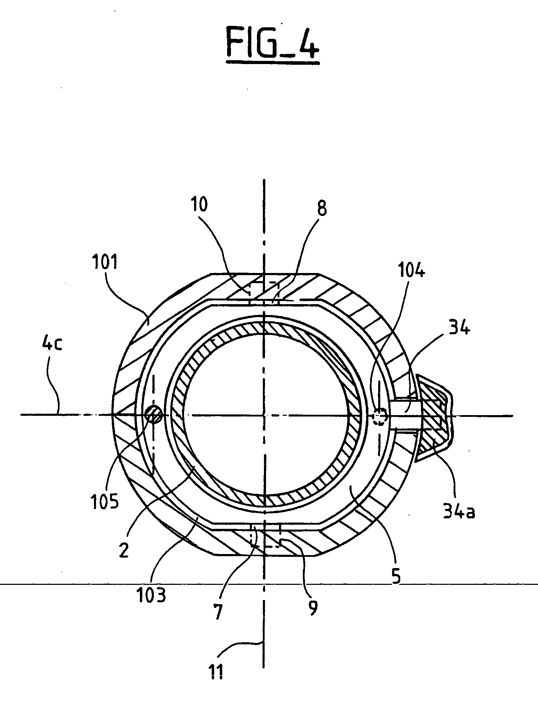

En se reportant à la variante représentée sur les figures 3 et 4, on voit que le dispositif de blocage 100 se différencie de celui représenté sur les figures 1 et 2 par le fait que la tige de commande 32 est supprimée, l'élément allongé 102 est constitué par un tube cylindrique et par le fait que la rondelle de basculement 5 présente un appendice latéral 34 qui s'étend au travers d'un passage 35 traversant la paroi du boîtier 101 de l'élément extérieur 4 et débouchant dans le logement 103.

L'appendice 34 de la rondelle de basculement 5 porte en outre un bouton extérieur 34a.

En agissant manuellement sur le bouton 108 porté par l'appendice 34 longitudinalement, on peut alors faire basculer la rondelle de basculement 5 comme précédemment de manière à agir sur les rondelles 13 et 23 dans le sens de leur déblocage.

Dans une variante d'exécution, la rondelle de basculement 5 munie de ses parties en saillie 104 et 105 constituant des organes entretoises peut être réalisée par moulage. Dans une autre variante, les parties en saillie 104 et 105 de la rondelle de basculement 5 pourraient être rapportées sur la rondelle 5 et fixées par exemple par vissage.

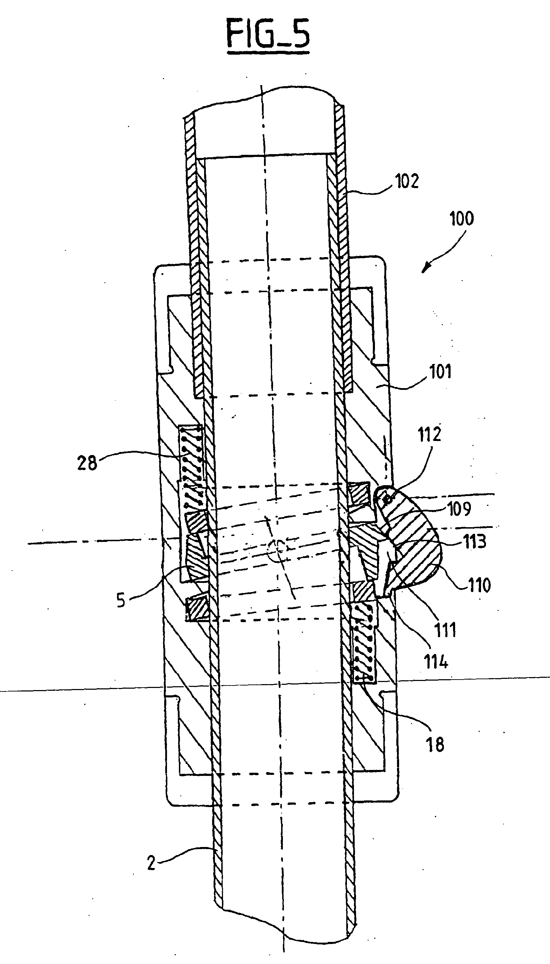

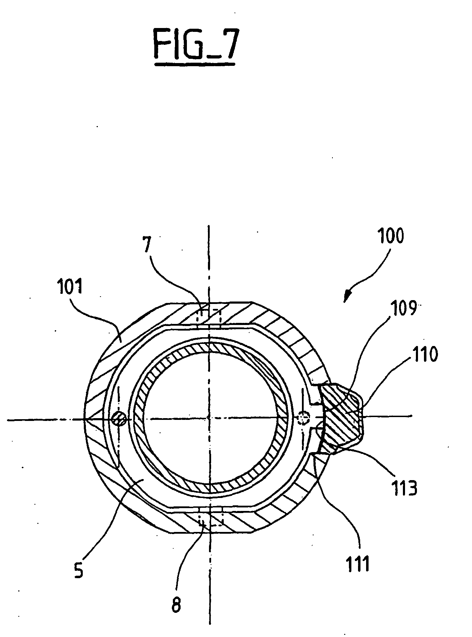

En se reportant à la variante représentée aux figures 5 à 7, on voit que le dispositif de blocage 100 se différencie de celui représenté sur les figures 3 et 4 par le fait que l'appendice latéral 34 de la rondelle de basculement 5 est écourté et présente en bout une surface inclinée 109, qu'un bouton 110 est placé dans un passage traversant 111 de la paroi du boîtier 101, situé dans la zone de la surface inclinée 109, et est articulé sur un axe transversal 112, que ce bouton 110 présente une surface inclinée 113 en appui sur la surface 109 de la rondelle 5 et un appendice 114 à son extrémité libre.

Comme le montre la figure 5, lorsque le dispositif de blocage 100 est à sa position bloquée, le bouton 110 est écarté vers l'extérieur, son appendice 114 étant en butée contre un épaulement 115 du boîtier 101 prévu dans son passage 111.

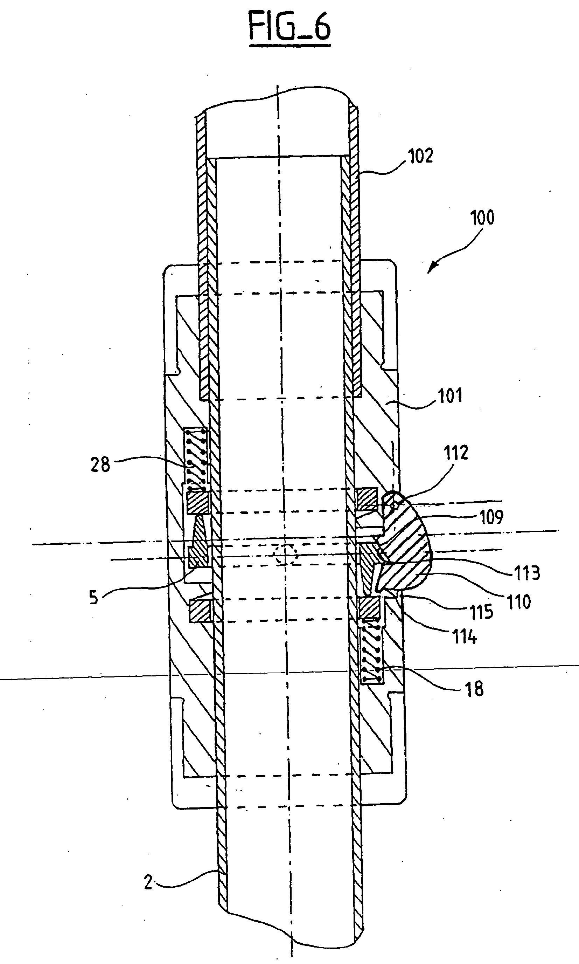

Comme le montre la figure 6, en exerçant manuellement une pression radiale vers l'intérieur sur le bouton 110, ce dernier s'enfonce dans le passage 111, son appendice 114 s'éloignant vers l'intérieur de l'épaulement 115. Ce faisant, à la manière d'une came, la surface inclinée 113 du bouton 110 agit sur la surface inclinée 109 de la rondelle de basculement 5 et fait pivoter cette dernière dans le sens du déblocage du dispositif 100 tel que décrit précédemment.

En relâchant la pression sur le bouton 110, la rondelle de pivotement 5 reprend sa position initiale sous l'effet des ressorts 18 et 28, comme décrit précédemment, et repousse le bouton 110 vers l'extérieur.

## Revendications

1. Dispositif de blocage de deux éléments allongés dont un premier coulisse dans un second de façon télescopique, comprenant
des moyens (12) pour bloquer dans un premier sens longitudinal le premier élément (2) par rapport au second élément (4) et des seconds moyens (22) pour bloquer dans l'autre sens longitudinal le premier élément par rapport au second élément, lesdits moyens de blocage comprenant des rondelles de blocage (13, 23) disposées autour du premier élément et dont respectivement une partie circonférentielle est placée entre deux appuis longitudinalement opposés dudit second élément et des organes élastiques de rappel (18, 28) placés entre ledit second élément et lesdites rondelles et agissant respectivement dans lesdits sens longitudinaux sur lesdites rondelles en des endroits éloignés desdits appuis de manière à amener lesdites rondelles de blocage dans des positions inclinées extrêmes par rapport au premier élément, dans lesquelles deux parties opposées des rondelles de blocage sont en contact avec le premier élément afin de bloquer le premier élément (2) par rapport au second élément (4) dans lesdits sens longitudinaux ;
**caractérisé par le fait qu'**il comprend en outre :
un organe de basculement (5) comprenant une rondelle de basculement qui entoure à distance ledit premier élément qui est montée de façon articulée sur le second élément, radialement à ce dernier, et qui est placée entre lesdites rondelles de blocage ;
des organes entretoises (104, 105) placés respectivement entre lesdites rondelles de blocage et ladite rondelle de basculement et solidaires de cette dernière ;
et un organe de commande (32) permettant d'agir sur l'organe de basculement, de telle sorte qu'une action sur cet organe de commande fait basculer l'organe de basculement qui, par l'intermédiaire desdits organes entretoises, agit sur lesdites rondelles de blocage de façon à les écarter de leurs positions extrêmes précitées à l'encontre desdits moyens de rappel, en réduisant leur inclinaison, afin de libérer le premier élément par rapport au second élément.

2. Dispositif selon la revendication 1, **caractérisé par le fait que** l'organe de basculement (5) et lesdits organes entretoises (104, 105) forment une pièce unique.

3. Dispositif selon l'une des revendications 1 et 2, **caractérisé par le fait que** lesdits organes entretoises comprennent respectivement une partie en saillie (104, 105) formée sur la face de ladite rondelle de basculement tournée du côté de la rondelle de blocage correspondante (13, 23).

4. Dispositif selon l'une quelconque des revendications précédentes, **caractérisé par le fait que** le second élément (4) comprend un boîtier (101) en deux parties assemblées (4a, 4b) dont le plan de contact entre elles s'étend selon un plan longitudinal (33) passant par l'axe desdits éléments, que lesdits éléments de blocage, lesdits organes de rappel, ledit organe de basculement (5) muni desdits organes entretoises (104, 105) et ledit organe de commande (32, 34) sont disposés dans un espace (103) ménagé entre lesdites parties assemblées du second élément et que ledit organe de basculement (5) muni desdits organes entretoises est articulé selon un axe (11) dudit boîtier perpendiculaire audit plan de contact (4c).

5. Dispositif selon la revendication 4, **caractérisé par le fait que** ledit boîtier (101) comprend des bagues d'assemblage (106, 107) qui entourent les extrémités de ses parties précitées (4a, 4b).

6. Dispositif selon l'une des revendications 4 et 5, **caractérisé par le fait que** ledit second élement comprend un élément tubulaire (102) dont une partie d'extrémité est fixée audit boîtier (101) et dans lequel peut coulisser ledit premier élément.

7. Dispositif selon la revendication 6, **caractérisé par le fait que** ledit élément tubulaire comprend un canal longitudinal auxiliaire (33) et que ledit organe de commande comprend une tige de commande (32) disposée dans ce canal longitudinal.

8. Dispositif selon l'une quelconque des revendications précédentes, **caractérisé par le fait que** ledit organe de commande comprend un bouton (110) monté mobile sur ledit boîtier de façon à pouvoir être déplacé par pression, ce bouton et ledit organe de basculement comprenant des surfaces en appui (109, 113) telles que lorsque ledit bouton est déplacé dans un sens, il agit sur ledit organe de basculement pour écarter la ou lesdites rondelles de sa ou leur position extrême précitée.

9. Dispositif selon la revendication 9, **caractérisé par le fait que** ledit bouton (110) est monté pivotant sur ledit boîtier de façon à se déplacer sensiblement radialement.

10. Dispositif selon l'une quelconque des revendications précédentes, **caractérisé par le fait que** lesdits moyens d'appui desdites rondelles sont diamétralement opposés, lesdits organes élastiques de rappel sont diamétralement opposés respectivement auxdits moyens d'appui et lesdits organes entretoises sont respectivement diamétralement opposés aux moyens d'appui des rondelles correspondantes

## Claims

1. Device for locking two elongated elements, a first of which slides telescopically in a second, comprising means (12) for locking, in a first longitudinal direction, the first element (2) relative to the second element (4), and second means (22) for locking, in the other longitudinal direction, the first element relative to the second element, said locking means comprising locking washers (13, 23) arranged around the first element and a respective circumferential portion of which is placed between two longitudinally opposite supports of said second element, and elastic return members (18, 28) placed between said second element and said washers and acting respectively in said longitudinal directions on said washers at points remote from said supports so as to bring said locking washers into inclined end positions relative to the first element, in which positions two opposite portions of the locking washers are in contact with the first element in order to lock the first element (2) relative to the second element (4) in said longitudinal directions;
**characterized in that** it additionally comprises:
a tilting member (5) comprising a tilting washer which surrounds said first element at a distance, which is mounted in an articulated manner on the second element, radially to the latter, and which is placed between said locking washers;
spacer members (104, 105) placed respectively between said locking washers and said tilting member and integral with this member; and
a control member (32) for acting on the tilting member, such that an action on this control member causes the tilting member to tilt, which tilting member, by way of said spacer members, acts on said locking washers so as to move them away from their aforementioned end positions counter to said return means, thereby reducing their inclination, in order to release the first element relative to the second element.

2. Device according to Claim 1, **characterized in that** the tilting member (5) and said spacer members (104, 105) form a single component.

3. Device according to either of Claims 1 and 2, **characterized in that** said spacer members respectively comprise a projecting part (104, 105) formed on the face of said tilting washer that faces the corresponding locking washer (13, 23).

4. Device according to any one of the preceding claims, **characterized in that** the second element (4) comprises a casing (101) composed of two assembled parts (4a, 4b), the plane of contact between which parts extends in a longitudinal plane (4c) passing through the axis of said elements, **in that** said locking elements, said return members, said tilting member (5) provided with said spacer members (104, 105), and said control member (32, 34) are arranged in a space (103) formed between said assembled parts of the second element, and **in that** said tilting member (5) provided with said spacer members is articulated about an axis (11) of said casing perpendicular to said plane of contact (4c).

5. Device according to Claim 4, **characterized in that** said casing (101) comprises assembly collars (106, 107) which surround the ends of its aforementioned parts (4a, 4b).

6. Device according to either of Claims 4 and 5, **characterized in that** said second element comprises a tubular element (102), an end part of which is fixed to said casing (101) and in which said first element can slide.

7. Device according to Claim 6, **characterized in that** said tubular element comprises an auxiliary longitudinal duct (33), and **in that** said control member comprises a control rod (32) arranged in this longitudinal duct.

8. Device according to any one of the preceding claims, **characterized in that** said control member comprises a button (110) mounted movably on said casing so as to be able to be moved by pressure, this button and said tilting member comprising bearing surfaces (109, 113) such that when said button is moved in one direction, it acts on said tilting member in order to move said washer or washers away from its or their aforementioned end position or positions.

9. Device according to Claim 8, **characterized in that** said button (110) is mounted pivotably on said casing so as to move substantially radially.

10. Device according to any one of the preceding claims, **characterized in that** said support means for said washers are diametrically opposed, said elastic return members are diametrically opposed respectively to said support means, and said spacer members are respectively diametrically opposed to the support means for the corresponding washers.

## Patentansprüche

1. Vorrichtung zur Verriegelung von zwei länglichen Elementen, von denen ein erstes teleskopartig in einem zweiten gleitet, die aufweist
Mittel (12), um das erste Element (2) bezüglich des zweiten Elements (4) in einer ersten Längsrichtung zu verriegeln, und zweite Mittel (22), um das erste Element bezüglich des zweiten Elements in der anderen Längsrichtung zu verriegeln, wobei die Verriegelungsmittel Sicherungsscheiben (13, 23), die um das erste Element herum angeordnet sind und von denen jeweils ein Umfangsbereich zwischen zwei in Längsrichtung entgegengesetzten Auflagern des zweiten Elements angeordnet ist, und elastische Rückstellmittel (18, 28) aufweisen, die zwischen dem zweiten Element und den Scheiben angeordnet sind und in den Längsrichtungen auf die Scheiben an von den Auflagern entfernten Stellen einwirken, um die Sicherungsscheiben bezüglich des ersten Elements in geneigte Endstellungen zu bringen, in denen zwei entgegengesetzte Bereiche der Sicherungsscheiben mit dem ersten Element in Kontakt sind, um das erste Element (2) bezüglich des zweiten Elements (4) in den Längsrichtungen zu verriegeln;
**dadurch gekennzeichnet, dass** sie außerdem aufweist:
eine Kippeinrichtung (5), die eine Kippscheibe aufweist, die das erste Element in Abstand umgibt, die auf das zweite Element radial zu diesem angelenkt montiert ist, und die zwischen den Sicherungsscheiben angeordnet ist;
Abstandshaltereinrichtungen (104, 105), die zwischen den Sicherungsscheiben und der Kippeinrichtung angeordnet und mit letzterer fest verbunden sind;
und eine Steuereinrichtung (32), die es ermöglicht, so auf die Kippeinrichtung einzuwirken, dass eine Einwirkung auf diese Steuereinrichtung die Kippeinrichtung kippen lässt, die über die Abstandshaltereinrichtungen derart auf die Sicherungsscheiben einwirkt, dass sie sie gegen die Wirkung der Rückstellmittel von ihren erwähnten Endstellungen entfernt, indem sie ihre Neigung verringert, um das erste Element vom zweiten Element zu lösen.

2. Vorrichtung nach Anspruch 1, **dadurch gekennzeichnet, dass** die Kippeinrichtung (5) und die Abstandshaltereinrichtungen (104, 105) ein einziges Bauteil bilden.

3. Vorrichtung nach einem der Ansprüche 1 und 2, **dadurch gekennzeichnet, dass** die Abstandshaltereinrichtungen je einen vorstehenden Bereich (104, 105) aufweisen, der auf der Fläche der Kippscheibe angeordnet ist, die zur Seite der entsprechenden Sicherungsscheibe (13, 23) gerichtet ist.

4. Vorrichtung nach einem der vorhergehenden Ansprüche, **dadurch gekennzeichnet, dass** das zweite Element (4) ein Gehäuse (101) aus zwei zusammengebauten Teilen (4a, 4b) aufweist, deren gegenseitige Kontaktebene sich gemäß einer Längsebene (33) erstreckt, die durch die Achse der Elemente verläuft, dass die Verriegelungselemente, die Rückstelleinrichtungen, die mit den Abstandshaltereinrichtungen (104, 105) versehene Kippeinrichtung (5) und die Steuereinrichtung (32, 34) in einem Raum (103) angeordnet sind, der zwischen den zusammengebauten Teilen des zweiten Elements ausgespart ist, und dass die mit den Abstandshaltereinrichtungen versehene Kippeinrichtung (5) gemäß einer Achse (11) des Gehäuses lotrecht zur Kontaktebene (4c) angelenkt ist.

5. Vorrichtung nach Anspruch 4, **dadurch gekennzeichnet, dass** das Gehäuse (101) Montageringe (106, 107) aufweist, die die Enden seiner erwähnten Teile (4a, 4b) umgeben.

6. Vorrichtung nach einem der Ansprüche 4 und 5, **dadurch gekennzeichnet, dass** das zweite Element ein rohrförmiges Element (102) aufweist, von dem ein Endbereich am Gehäuse (101) befestigt ist, und in dem das erste Elemente gleiten kann.

7. Vorrichtung nach Anspruch 6, **dadurch gekennzeichnet, dass** das rohrförmige Element einen zusätzlichen Längskanal (33) aufweist, und dass die Steuereinrichtung eine Steuerstange (32) aufweist, die in diesem Längskanal angeordnet ist.

8. Vorrichtung nach einem der vorhergehenden Ansprüche, **dadurch gekennzeichnet, dass** die Steuereinrichtung einen Knopf (110) aufweist, der derart beweglich auf das Gehäuse montiert ist, dass er durch Druck verschoben werden kann, wobei dieser Knopf und die Kippeinrichtung derartige Auflageflächen (109, 113) aufweisen, dass der Knopf, wenn er in einer Richtung verschoben wird, auf die Kippeinrichtung einwirkt, um die Scheibe oder die Scheiben von ihrer erwähnten Endstellung zu entfernen.

9. Vorrichtung nach Anspruch 8, **dadurch gekennzeichnet, dass** der Knopf (110) derart schwenkbar auf das Gehäuse montiert ist, dass er sich im Wesentlichen radial verschiebt.

10. Vorrichtung nach einem der vorhergehenden Ansprüche, **dadurch gekennzeichnet, dass** die Auflagemittel der Scheiben einander diametral gegenüberliegen, die elastischen Rückstellmittel den Auflagemitteln diametral gegenüberliegen und die Abstandshaltereinrichtungen den Auflagemitteln der entsprechenden Scheiben diametral gegenüberliegen.
